# EUROPÄISCHE PATENTSCHRIFT

(11) **EP 0 691 795 B1**
(45) Veröffentlichungstag und Bekanntmachung des Hinweises auf die Patenterteilung: **16.04.2003**
(21) Anmeldenummer: 95110107.0
(22) Anmeldetag: 28.06.1995
(51) Int. Cl.: H04Q 11/00

(54) **Optische WDM-Koppelanordnung**
Optical wavelength division multiplex switch
Commutateur optique avec multiplexage à longueur d'onde

(30) Priorität: 08.07.1994 DE 4424139
(43) Veröffentlichungstag der Anmeldung: 10.01.1996
(73) Patentinhaber: SIEMENS AKTIENGESELLSCHAFT, 80333 München (DE)
(72) Erfinder: Huber, Manfred, Dr.-Ing., D-82166 Gräfelfing (DE); Tegtmeyer, Volker, Dipl.-Ing., D-81545 München (DE); Wolf, Hartmut, Dipl.-Ing., D-82380 Peissenberg (DE)

(56) Entgegenhaltungen:
- EP-A- 0 494 831
- EP-A- 0 548 453
- IEICE TRANSACTIONS ON COMMUNICATIONS, Bd. e75-b, Nr. 4, April 1992 TOKYO JP, Seiten 267-273, XP 000301364 H. ROKUGAWA ET AL 'Wavelength Conversion Laser Diodes Application to Wavelength-Division Cross-Connect Node with Multistage Configuration'

## Beschreibung

Die Erfindung bezieht sich auf optische Koppelanordnungen zum wellenlängenindividuellen Durchschalten zwischen Wellenlängenmultiplex-(WDM-)Eingangs- und Ausgangsfasern bei gleichzeitig möglicher Wellenlängenkonversion.

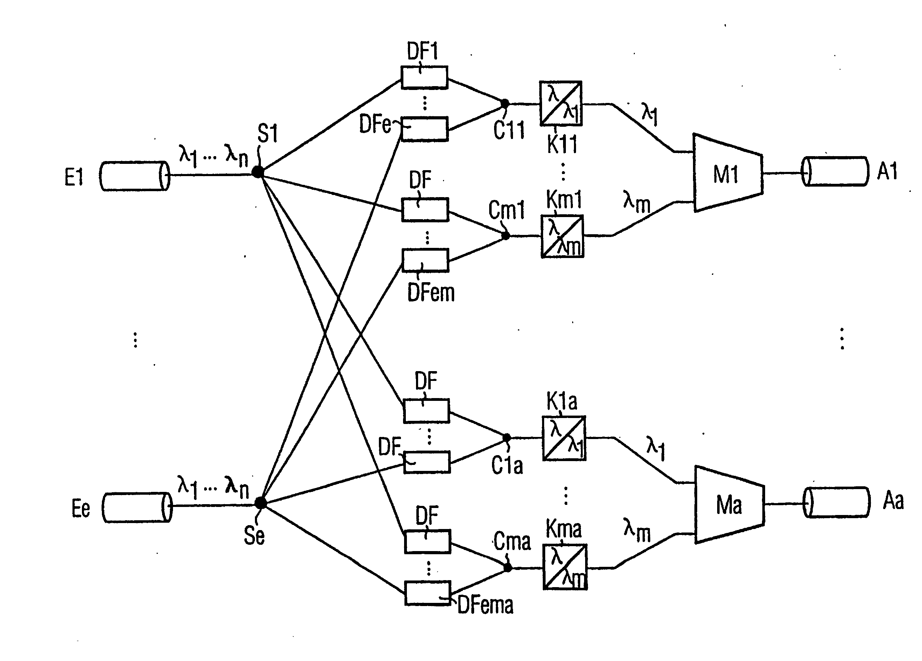

WDM-Koppelanordnungen, bei denen eingangsseitige Wellenlängen-Demultiplexer, ausgangsseitige Wellenlängen-Multiplexer, Wellenlängen-Konverter zur Wellenlängenumsetzung auf die jeweils abgehende Wellenlänge sowie eine dazwischenliegende Raumkoppelanordnung vorgesehen sind, sind aus ntz 46(1993)1, Seiten 16...21 (siehe dort Bild 13 und Bild 14), bekannt. Von gleicher Struktur ist auch eine aus Conf.Proc.ICC'93, pp 1300 ... 1307, bekannte WDM-Koppelanordnung mit
- eingangsseitigen, jeweils das auf der zugehörigen Eingangsfaser ankommende optische Signal nach Wellenlängen aufteilenden Wellenlängen-Demultiplexern,
- einer nachfolgenden Raumkoppelanordnung;
- nachfolgenden, die jeweils ankommende Wellenlänge auf die jeweilige abgehende Wellenlänge umsetzenden einstellbaren Wellenlängen-Konvertern und
- ausgangsseitigen, die ihnen zugeführten Wellenlängen zusammenfassenden Wellenlängen-Multiplexern.

Diese bekannten WDM-Koppelanordnungen weisen jeweils eine Raumkoppelanordnung auf; die Erfindung will demgegenüber eine andere Koppelanordnungsstruktur angeben, die auf eine solche Raumkoppelanordnung verzichten kann.

Aus der EP-A-0 494 831 ist eine optische WDM-Koppelanordnung bekannt, bei der ein ankommendes Signal mit den Wellenlängen λ₁ bis λₙ an mehrere parallel angeordnete optische Verarbeitungseinrichtungen verteilt wird, wobei die optischen Verarbeitungseinheiten mit einem optischen Referenzgenerator verbunden sind und mit dessen Hilfe die mit der jeweiligen Wellenlänge ankommenden Signale regeneriert werden.

Die Erfindung betrifft eine optische Koppelanordnung zum wellenlängenindividuellen Durchschalten zwischen Wellenlängenmultiplex-(WDM-)Eingangs- und Ausgangsfasern mit gleichzeitiger Wellenlängenkonversionsmöglichkeit; diese Koppelanordung ist erfindungsgemäß dadurch gekennzeichnet, daß jeweils ein eingangsfaser-individueller optischer Splitter das auf der zugehörigen Eingangsfaser ankommende WDM-Signal in a·m WDM-Signale vervielfacht, welche a·m durchstimmbaren optischen Filtern zugeführt werden, worin a die Anzahl der Ausgangsfasern und m die Anzahl der auf einer Ausgangsfaser jeweils in einem Wellenlängenmultiplex zusammengefassten Wellenlängen ist, und daß jeweils e mit den e Eingangsfasern verbundene durchstimmbare Filter, ausgangsseitig über einen optischen Kombinierer zusammengefasst, zu einem Wellenlängenkonverter führen, der mit einem Eingang eines einer Ausgangsfaser vorgeschalteten Wellenlängenmultiplexers verbunden ist.

Die Erfindung ermöglicht vorteilhafterweise eine Verbindungsdurchschaltung zwischen beliebigen Eingangs- und Ausgangsfasern, ohne eine gesonderte Raumkoppelanordnung zu benötigen; dabei können ausser Punkt-zu-Punkt-Verbindungen auch Punktzu-Mehrpunkt-Verbindungen realisiert werden.

Weitere Besonderheiten der Erfindung werden aus den nachstehenden Erläuterungen an Hand der Zeichnung ersichtlich.

In der Zeichnung ist schematisch in einem zum Verständnis der Erfindung erforderlichem Umfange ein Ausführungsbeispiel einer zwischen e Eingangsfasern E1,...,Ee und a Ausgangsfasern A1,...,Aa liegenden optischen Koppelanordnung gemäß der Erfindung dargestellt, wobei auf einer Eingangsfaser maximal n Wellenlängen λ₁, ..., λₙ und auf einer Ausgangsfaser maximal m Wellenlängen λ₁, ..., λₘ im Wellenlängenmultiplex zusammengefasst sein mögen. Die Eingangsfasern E1, ..., Ee führen jeweils zu einem eingangsfaser-individuellen optischen Splitter (S1, ..., Se), in dem das auf der zugehörigen Eingangsfaser ankommende WDM-Signal in a·m WDM-Signale vervielfacht wird; diese a·m WDM-Signale werden a·m durchstimmbaren Filtern DF1, ... zugeführt. Von den insgesamt e·a·m durchstimmbaren Filtern DF1, ..., DFe, ..., DFem, ..., DFema werden jeweils e mit den e Eingangsfasern E1, ..., Ee verbundene durchstimmbare Filter, z.B. die Filter DF1, ..., DFe, ausgangsseitig über einen optischen Kombinierer (C11, ..., Cm1, ..., C1a, ..., Cma; im Beispiel über den Kombinierer C11) zusammengefasst, der zu einem Wellenlängenkonverter (K11, ..., Km1, ..., K1a, ..., Kma; im Beispiel zum Wellenlängenkonverter K11) führt, dessen Ausgang mit dem Eingang eines einer Ausgangsfaser, im Beispiel der Ausgangsfaser A1, vorgeschalteten Wellenlängenmultiplexers M1, ... verbunden ist. Die einstellbaren Filter DF1, ..., DFe, ..., DFem, ..., DFema werden dabei in der Weise betrieben, daß jeweils nicht mehr als eines der mit ein und demselben Wellenlängenkonverter (z.B. K11) verbundenen Filter (DF1, ..., DFe) das Signal einer gerade ausgewählten Wellenlänge (z.B. λₙ) durchlässt, während die übrigen mit dem betreffenden Wellenlängenkonverter (im Beispiel K11) verbundenen Filter (..., DFe) gesperrt sind. Das betreffende Signal, auf dessen Wellenlänge das betreffende Filter (z.B. DFe) gerade abgestimmt ist, gelangt zum nachfolgenden Wellenlängenkonverter (K11), wo es unabhängig von der bisherigen (Eingangs-)Wellenlänge (λₙ) auf eine fest definierte (Ausgangs-)Wellenlänge (im Beispiel λ₁) umgesetzt wird.

Der vorstehenden Erläuterung liegt das Beispiel einer Punktzu-Punkt-Verbindung zugrunde, in der ein auf der Eingangsfaser Ee mit der Wellenlänge λₙ ankommendes Signal in ein auf der Ausgangsfaser A1 mit der Wellenlänge λ₁ weitergeführtes Signal umgesetzt wird.
Wenn dieses auf der Eingangsfaser Ee mit der Wellenlänge λₙ ankommende Signal nicht nur einem, sondern mehreren Wellenlängenkonvertern zugeführt wird, die dabei zu einunddemselben oder auch zu mehreren Wellenlängenmultiplexern führen können, erhält man eine entsprechende Punkt-zu-Mehrpunkt-Verbindung, ohne daß dies noch weiterer Erläuterungen bedarf.

Realisierungsprinzipien für die einzelonen,im vorstehenden erwähnten optischen Komponenten der WDM-Koppelanordnung sind grundsätzlich (z.B. aus Paul E. Green, jr.: Fiber Optics Networks, Prentice Hall Englewood Cliffs, New Jersey) bekannt, so daß es auch insoweit zum Verständnis der Erfindung keiner weiteren Erläuterungen bedarf.

## Patentansprüche

1. Optische Koppelanordnung zum wellenlängenindividuellen Durchschalten zwischen Wellenlängenmultiplex-(WDM-)Eingangs- und Ausgangsfasern bei gleichzeitig möglicher Wellenlängenkonversion,
**dadurch gekennzeichnet,**
**daß** jeweils ein eingangsfaser-individueller optischer Splitter (S1, ..., Se) das auf der zugehörigen Eingangsfaser (E1, ..., Ee) ankommende WDM-Signal in a·m WDM-Signale vervielfacht, die a·m durchstimmbaren optischen Filtern (DF) zugeführt werden, worin a die Anzahl der Ausgangsfasern (A1, ..., Aa) und m die Anzahl der auf einer Ausgangsfaser (A1,...,Aa) jeweils im Wellenlängenmultiplex zusammengefassten Wellenlängen (λ₁, ..., λₘ) ist, und daß jeweils e mit den e Eingangsfasern (E1, ..., Ee) verbundene durchstimmbare Filter (DF), ausgangsseitig über einen optischen Kombinierer (C11, ..., Cm1 ..., C1a, ..., Cma) zusammengefasst, zu einem Wellenlängenkonverter (K11, ..., Km1, ..., K1a, ..., Kma) führen, der mit einem Eingang eines einer Ausgangsfaser (A1, ..., Aa) vorgeschalteten Wellenlängenmultiplexers (M1, .... Ma) verbunden ist, wobei nicht meln als eines der durchstimmbaren Filter (DF₁,...,DFₑ), die mit dem gleichen kombinierer (C11) verbunden sind, das Signal einer Wellenlänge durchläßt

## Claims

1. Optical switching network for wavelength-specific through switching between wavelength division multiplex (WDM) input and output fibres in conjunction with possible wavelength conversion, **characterized in that** in each case an input-fibre-specific optical splitter (S1, ..., Se) multiplies the WDM signal arriving on the associated input fibre (E1, ..., Ee) to produce a·m WDM signals which are fed to a·m· full-range tuneable optical filters (DF), wherein a is the number of the output fibres (A1, ..., Aa) and m is the number of the wavelengths (λ₁, ..., λₘ) respectively combined by wavelength division multiplex on an output fibre (A1, ..., Aa), and **in that** in each case e full-range tuneable filters (DF) connected to the e input fibres (E1, ..., Ee) are led, combined at the output end via an optical combiner (C11, ..., Cm1, ..., C1a, ..., Cma), to a wavelength converter (K11, ..., Km1, ..., K1a, ..., Kma) which is connected to an input of a wavelength division multiplexer (M1, ..., Ma) connected upstream of an output fibre (A1, ..., Aa), not more than one of the full-range tuneable filters (DF₁, ..., Dfₑ) which are connected to the same combiner (C11) passing the signal of one wavelength.

## Revendications

1. Commutateur optique pour commuter, individuellement pour chaque longueur d'onde, entre des fibres d'entrée et des fibres de sortie WDM (multiplexage à longueur d'onde) tout en permettant simultanément la conversion de longueur d'onde, **caractérisé en ce qu'**un répartiteur optique (S1, ..., Se), individuel pour chaque fibre d'entrée, multiplie dans chaque cas le signal WDM arrivant sur la fibre d'entrée associée (E1, ..., Ee) pour en faire a·m signaux WDM, lesquels sont amenés à a·m filtres optiques variables (DF), a étant le nombre de fibres de sortie (A1, ..., Aa) et m, le nombre de longueurs d'onde (λ₁, ..., λₘ) à chaque fois regroupées sur une fibre de sortie (A1, ..., Aa) par multiplexage à longueur d'onde et **en ce que** e filtres variables (DF) connectés aux e fibres d'entrée (E1, ..., Ee) et réunis, côté sortie, par l'intermédiaire d'un combinateur optique (C11, ..., Cm1, ..., C1a, ..., Cma), conduisent à un convertisseur de longueur d'onde (K11, ..., Kml, ..., K1a, ..., Kma), lequel est connecté à une entrée d'un multiplexeur à longueur d'onde (M1, ..., Ma) situé en amont d'une fibre de sortie (A1, ..., Aa), pas plus d'un des filtres variables (DF1, ..., DFe) connectés à un seul et même combinateur (C11) ne laissant passer le signal d'une longueur d'onde.
